# FASCICULE DE BREVET EUROPEEN

(11) **EP 4 186 009 B1**
(45) Date de publication et mention de la délivrance du brevet: **14.08.2024**
(21) Numéro de dépôt: 21749130.7
(22) Date de dépôt: 21.07.2021
(51) Int. Cl.: G06N 10/20, G06N 10/40, G06N 10/60, G06N 10/80

(54) **PROCÉDÉS D'ALLOCATION DE QUBITS LOGIQUES D'UN ALGORITHME QUANTIQUE DANS UN PROCESSEUR QUANTIQUE**
VERFAHREN ZUR ZUWEISUNG LOGISCHER QUBITS EINES QUANTENALGORITHMUS IN EINEM QUANTENPROZESSOR
METHODS FOR ALLOCATING LOGICAL QUBITS OF A QUANTUM ALGORITHM IN A QUANTUM PROCESSOR

(30) Priorité: 24.07.2020 FR 2007848
(43) Date de publication de la demande: 31.05.2023
(73) Titulaire: Pasqal, 91300 Massy (FR)
(72) Inventeur: GUIMARÃES SILVÉRIO, Henrique, 91440 Bures-sur-Yvette (FR); HENRIET, Loïc, 44000 Nantes (FR)
(74) Mandataire: Lavoix
(86) Numéro de dépôt international: PCT/EP2021/070395
(87) Numéro de publication internationale: WO 2022/018140

(56) Documents cités:
- US-A1- 2020 125 985
- LOIC HENRIET ET AL: "Quantum computing with neutral atoms", ARXIV.ORG, CORNELL UNIVERSITY LIBRARY, 201 OLIN LIBRARY CORNELL UNIVERSITY ITHACA, NY 14853, 22 June 2020 (2020-06-22), XP081700350
- MARCOS YUKIO SIRAICHI ET AL: "Qubit allocation", CODE GENERATION AND OPTIMIZATION, ACM, 2 PENN PLAZA, SUITE 701NEW YORKNY10121-0701USA, 24 February 2018 (2018-02-24), pages 113 - 125, XP058384657, ISBN: 978-1-4503-5617-6, DOI: 10.1145/3168822

## Description

### Domaine technique de l'invention

La présente description concerne des procédés d'allocation de qubits logiques d'un algorithme quantique dans un processeur quantique et concerne plus précisément des procédés d'allocation de qubits logiques d'un algorithme quantique dans un processeur quantique à atomes neutres.

### Etat de la technique

La présente description concerne le domaine des processeurs permettant un traitement quantique de l'information, ou processeurs quantiques. Le traitement quantique de l'information est un domaine actif en raison des multiples applications pouvant bénéficier des performances qu'il promet, notamment le calcul intensif en chimie, en biochimie, en sciences des matériaux, l'apprentissage machine, le calcul combinatoire ou la cryptographie.

Pour traiter des données, un processeur quantique utilise des algorithmes quantiques, qui sont des successions d'opérations logiques quantiques effectuées sur des qubits logiques. Un exemple d'algorithme quantique est l'algorithme de Deutsch-Jozsa et un exemple d'opération logique quantique est l'opération « CNOT » (d'après l'expression anglaise « Controlled NOT »).

Les qubits logiques sont l'équivalent quantique des bits utilisés dans les algorithmes permettant un traitement classique de l'information et les opérations logiques quantiques sont l'équivalent quantique des opérations logiques binaires effectuées sur les bits, comme une opération « ET » ou « NON ».

Dans la suite de la description, on appellera « porte logique quantique » une telle opération logique quantique et « porte logique quantique collective » une porte logique quantique impliquant au moins deux qubits logiques distincts.

Il est connu d'établir, pour caractériser un algorithme quantique, un « graphe des opérations logiques» dont les noeuds représentent les qubits logiques intervenant dans l'algorithme quantique et dont les liens représentent les portes logiques quantiques collectives entre les qubits logiques.

En pratique, l'algorithme quantique est implémenté physiquement dans le processeur quantique grâce à des interactions entre des entités physiques (par exemple des atomes neutres, des ions ou des circuits supraconducteurs), appelés « qubits physiques » dans la présente description.

Pour implémenter un algorithme quantique dans un processeur quantique il est donc utile de choisir, pour chaque qubit logique de l'algorithme, un qubit physique particulier sur lequel seront effectuées physiquement des interactions correspondant à des opérations logiques qui impliquent ledit qubit logique dans l'algorithme. Ce choix d'une correspondance entre un qubit logique de l'algorithme et un qubit physique du processeur est connu sous le nom d'« allocation » dudit qubit logique audit qubit physique. Ainsi, l'allocation de plusieurs qubits logiques de l'algorithme à plusieurs qubits physiques du processeur résulte en une « configuration d'allocation ».

Les qubits physiques d'un processeur quantique sont agencés spatialement selon une architecture donnée. Le terme de « registre quantique » est utilisé pour définir cet ensemble de qubits physiques agencés selon cette architecture et pouvant être manipulés individuellement. L'architecture apporte des contraintes pour l'allocation des qubits logiques car les interactions entre qubits physiques, permettant de réaliser en pratique l'effet d'une porte collective, ne peuvent avoir lieu que si les qubits physiques respectent certains critères, comme par exemple une distance maximale entre qubits physiques ou l'existence d'une connexion physique entre qubits physiques.

Il est connu d'établir, pour traduire les contraintes liées à l'architecture d'un registre quantique, un « graphe de connectivité » dont les noeuds représentent les qubits physiques du processeur et dont les liens représentent la possibilité d'interaction entre qubits physiques permettant la réalisation pratique d'une porte collective.

Dans ce graphe de connectivité, seul l'existence d'un lien entre deux noeuds indique que les qubits physiques correspondant auxdits noeuds peuvent interagir pour réaliser en pratique l'effet d'une porte collective.

Pour faire interagir des qubits physiques non-reliés dans le graphe de connectivité, il est possible d'utiliser plusieurs interactions intermédiaires, appelées opérations d'échange, faisant intervenir des qubits physiques reliés qui servent de relais à une interaction entre qubits physiques non-reliés. En pratique, l'opération d'échange est une porte logique quantique collective qui échange l'état quantique de deux qubits physiques.

Ainsi, dans le document de Henriet et al. (« Quantum computing with neutral atoms », Quantum, vol.4, p.327, 2020*),* une méthode est proposée dans laquelle des qubits logiques sont alloués à des positions d'un agencement de qubits physiques, puis des opérations d'échange sont introduites afin de pouvoir faire interagir des qubits physiques éloignés qui ne peuvent pas réaliser l'effet d'une porte collective. Cependant, une telle méthode ne décrit pas comment minimiser en pratique le nombre d'opération d'échanges dans une configuration d'allocation. Or, l'utilisation d'opérations d'échange augmente le nombre total d'interactions entre qubits physiques ayant lieu lors de l'implémentation d'un algorithme quantique donné, ce qui accroît les risques d'erreur dans l'algorithme quantique, c'est-à-dire les risques que l'algorithme quantique, une fois implémenté dans un processeur quantique, donne un résultat erroné. Ainsi, toutes les configurations d'allocation des qubits logiques d'un algorithme quantique donné aux qubits physiques d'un processeur quantique d'architecture donnée ne sont pas équivalentes en termes de risques d'erreur.

Il est donc souhaitable de trouver des méthodes d'allocation pour réduire le nombre d'opérations d'échange lors de l'implémentation d'un algorithme quantique donné dans un processeur quantique donné.

Dans le document de Siraichi et al. (« Qubit allocation » in Proceedings of the 2018 International Symposium on Code Génération and Optimization. 2018. p. 113-125*),* une méthode d'allocation exacte est proposée. La méthode fournit une solution exacte qui résout le problème d'allocation en calculant toutes les configurations d'allocation possibles et en choisissant la configuration impliquant le moins d'opérations d'échanges.

Cependant la méthode décrite présente une complexité en temps de type exponentiel par rapport au nombre de qubits logiques de l'algorithme, ce qui signifie qu'un temps d'exécution de la méthode augmente exponentiellement avec le nombre de qubits logiques de l'algorithme à allouer. Cela rend la méthode décrite incompatible avec l'allocation de plus d'environ 8 qubits logiques dans le registre quantique car cela requerrait un temps de calcul trop long (par exemple plusieurs jours).

Dans ce même document, une autre méthode est proposée, qui est heuristique (non-exacte) et a une complexité en temps de type polynomial. En particulier, la méthode permet de résoudre le problème d'allocation pour un nombre de qubits logiques supérieur à 8, en un temps raisonnable, par exemple quelques heures. La méthode décrite est uniquement adaptée au cas particulier des graphes de connectivité dirigés s'appliquant exclusivement à des processeurs quantiques à circuits supraconducteurs. De plus, la méthode décrite est déterministe et donne donc une seule configuration possible pour l'allocation des qubits logiques d'un algorithme quantique donné à des qubits physiques d'un graphe de connectivité donné.

La demande de brevet US20200125985 décrit une méthode hybride d'allocation de qubits logiques, combinant des étapes déterministes de recherche d'une solution exacte et une procédure de recuit simulé comprenant un caractère aléatoire.

La méthode hybride permet d'obtenir plusieurs configurations possibles pour l'allocation des qubits logiques d'un algorithme quantique donné à des qubits physiques de graphe de connectivité donné et de choisir la configuration avec le moins d'opérations d'échanges.

Cependant la méthode utilisée est là aussi optimisée pour des graphes de connectivité dirigés qui s'appliquent exclusivement à des processeurs quantiques à circuits supraconducteurs.

Il existe donc un besoin d'un procédé d'allocation des qubits logiques d'un algorithme quantique aux qubits logiques d'un processeur quantique qui permette de minimiser le nombre de portes d'échanges de la configuration d'allocation tout en présentant une complexité en temps compatible avec l'allocation d'un grand nombre de qubits logiques, typiquement un nombre supérieur ou égal à 50.

### Résumé de l'invention

Dans la présente description, le terme « comprendre » signifie la même chose que « inclure » ou « contenir », et est inclusif ou ouvert et n'exclut pas d'autres éléments non décrits ou représentés.

En outre, dans la présente description, le terme « environ » ou « sensiblement » est synonyme de (signifie la même chose que) une marge inférieure et/ou supérieure de 10%, par exemple 5%, de la valeur respective.

Dans la présente description, les termes « opération logique quantique » ; « opération logique », « porte logique quantique » et « porte logique » sont employés de façon interchangeable.

Dans la présente description, les termes « qubits physiques », « qubits physiques du processeur quantique » ou « qubits physiques du registre quantique » sont employés de façon interchangeable.

Dans la présente description, un qubit logique alloué est un qubit logique qui a été alloué à un qubit physique.

Dans la présente description, un qubit physique alloué est un qubit physique auquel a été alloué un qubit logique.

Selon un premier aspect, la présente description concerne un procédé d'allocation de qubits logiques d'un algorithme quantique à des qubits physiques d'un processeur quantique agencés selon une architecture donnée, ledit procédé comprenant :
- l'établissement, à partir de ladite architecture, d'un graphe de connectivité, chaque noeud dudit graphe représentant une position d'un qubit physique et chaque lien représentant une possibilité d'interaction entre deux qubits physiques ;
- l'établissement, à partir dudit algorithme quantique, d'un graphe des opérations logiques, chaque noeud dudit graphe représentant un qubit logique et chaque lien dudit graphe représentant une porte logique quantique entre deux qubits logiques ;
- l'attribution d'un poids à chaque qubit logique dudit graphe des opérations logiques, déterminé en fonction du nombre total de portes logiques faisant intervenir ledit qubit logique ;

- le classement des qubits logiques selon le poids ;
- l'allocation d'un premier qubit logique à un premier qubit physique du processeur quantique, ledit premier qubit logique étant choisi par un premier choix aléatoire favorisant un qubit logique ayant un poids le plus grand ;
- une procédure itérative d'allocation des qubits logiques restant à allouer comprenant :
- la sélection de qubits logiques candidats, lesdits qubits logiques candidats étant, parmi les qubits logiques restant à allouer, des qubits logiques liés dans le graphe des opérations logiques à au moins un des qubits logiques déjà alloués ;
- la sélection de qubits physiques candidats, lesdits qubits physiques candidats étant, parmi les qubits physiques restant à allouer, des qubits physiques liés dans le graphe de connectivité à au moins un des qubits physiques déjà alloués ;
- pour chaque couple de qubit logique candidat et qubit physique candidat, le calcul d'un score, chaque score étant déterminé, pour une allocation possible dudit qubit logique candidat audit qubit physique candidat, par le nombre d'opérations logiques entre ledit qubit logique candidat et les qubits logiques déjà alloués aux qubits physiques liés dans le graphe de connectivité audit qubit physique candidat ;
- le classement des couples de qubits logiques candidats et qubits physiques candidats selon le score ; et
- l'allocation d'un qubit logique à un qubit physique, ledit qubit logique et ledit qubit physique étant choisis par un deuxième choix aléatoire favorisant le qubit logique candidat et le qubit physique candidat d'un couple de qubit physique candidat et qubit logique candidat ayant un plus grand score parmi lesdits couples de qubits logiques candidats et qubits physiques candidats ;
- la reproduction de ladite procédure itérative d'allocation jusqu'à l'allocation du dernier qubit logique restant à allouer, résultant ainsi en l'obtention d'une configuration d'allocation de qubits logiques de l'algorithme quantique à des qubits physiques du processeur quantique.

Selon un ou plusieurs modes de réalisation, le classement des qubits logiques selon le poids est un classement par ordre décroissant de poids.

Selon un ou plusieurs modes de réalisation, le classement des couples de qubits logiques candidats et qubits physiques candidats selon le score, est un classement par ordre décroissant de score.

Avec le procédé selon le premier aspect, il est possible d'allouer tous les qubits logiques d'un algorithme quantique ou de n'allouer qu'une pluralité de qubits logiques de l'algorithme quantique parmi les qubits logiques de l'algorithme quantique. En particulier, le déposant a observé qu'il peut être avantageux de n'allouer qu'une pluralité de qubits logiques pour que l'allocation de la pluralité de qubits logiques ne soit pas soumise à des contraintes imposées par les autres qubits logiques de l'algorithme.

Dans un cas où l'on souhaite allouer tous les qubits logiques de l'algorithme, la procédure itérative d'allocation est reproduite jusqu'à allouer le dernier qubit logique de l'algorithme quantique.

Dans un cas où l'on souhaite allouer uniquement une pluralité de qubits logiques parmi les qubits logiques de l'algorithme quantique, la procédure itérative d'allocation est reproduite jusqu'à allouer le dernier qubit logique de ladite pluralité de qubits logiques.

Avec le procédé selon le premier aspect, le déposant a montré qu'il est possible d'obtenir une configuration d'allocation avec un nombre d'opération d'échange réduit. Cela est rendu possible notamment par l'établissement du score pour chaque couple de qubits logiques candidats et qubits physiques candidats, ledit score étant établi à chaque itération de la procédure itérative d'allocation. Un tel score permet de prévoir les opérations d'échange qu'il serait nécessaire d'introduire pour chaque allocation possible et donc de choisir, à chaque itération, l'allocation qui introduit le moins d'opérations d'échange afin d'aboutir à une configuration d'allocation qui comprend un nombre réduit d'opérations d'échanges.

Les procédés d'allocation sont généralement caractérisés par une complexité en temps. Par exemple un procédé avec une complexité en temps de type polynomial ou exponentiel par rapport au nombre de qubits logiques d'un algorithme, indique qu'un temps d'exécution du procédé augmente de façon polynomiale ou exponentielle avec le nombre de qubits logiques à allouer.

Le déposant a montré que le procédé d'allocation selon la présente description a un temps d'exécution augmentant de façon polynomiale avec le nombre de qubits logiques de l'algorithme. Cela permet d'allouer les qubits logiques d'un algorithme comprenant un grand nombre de qubits logiques, typiquement plus de 8 qubits logiques, voire plus de 50, avec un temps de calcul inférieur à quelques jours, avantageusement inférieur à quelques heures. Selon un ou plusieurs modes de réalisation, le procédé comprend, en outre, après l'allocation du dernier qubit logique, le calcul d'un nombre d'opérations d'échange à partir de ladite configuration d'allocation.

Le nombre d'opérations d'échange permet de caractériser l'efficience d'une configuration d'allocation obtenue avec le procédé selon la présente description. Cela permet, en outre, de comparer l'efficience du procédé selon la présente description par rapport à d'autres procédés de l'état de l'art.

Selon un ou plusieurs modes de réalisation, des étapes comprenant l'allocation d'un premier qubit logique, la procédure itérative d'allocation des qubits logiques restant à allouer et le calcul d'un nombre d'opérations d'échanges sont répétées plusieurs fois pour obtenir une pluralité de configurations d'allocation avec chacune un nombre d'opérations d'échanges, le procédé comprenant en outre :
- le choix d'une configuration ayant un plus petit nombre d'opérations d'échange parmi ladite pluralité de configurations d'allocation.

Le déposant a montré que la combinaison de la répétition desdites étapes et du caractère aléatoire (aussi dénommé non-déterministe dans la présente description) des choix utilisés dans des étapes du procédé d'allocation selon la présente description permet d'obtenir une configuration finale d'allocation pouvant être différente à chaque fois que le procédé est mis en oeuvre pour un même algorithme quantique et un même registre quantique.

Il est donc possible de répéter plusieurs fois le procédé, ou des étapes du procédé, pour obtenir plusieurs configurations finales d'allocation avec des nombres d'opérations d'échange différents, puis de choisir avantageusement la configuration avec un nombre d'opérations d'échange le plus petit.

Selon un ou plusieurs modes de réalisation, le procédé comprend, en outre, après l'allocation du dernier qubit logique, le calcul d'une fidélité de l'algorithme quantique pour ladite configuration d'allocation.

La fidélité (ou « fidélité quantique ») d'une ou plusieurs opérations quantiques est un nombre entre 0 et 1 (ou un pourcentage équivalent à ce nombre, c'est-à-dire en particulier 0% pour 0 et 100% pour 1) caractérisant la proximité entre un résultat obtenu lors de la mise en oeuvre de ladite ou desdites opérations quantiques avec un processeur quantique (pour une configuration d'allocation donnée) et un résultat obtenu lors de la mise en oeuvre des mêmes opérations avec un processeur parfait. En pratique, à titre d'exemple, si la fidélité d'une opération prédéterminée de l'algorithme quantique réalisée avec le processeur quantique est de 99%, cela signifie qu'il y a seulement une probabilité de 1% d'obtenir un résultat erroné après avoir effectué ladite opération.

La fidélité de l'algorithme quantique peut donc être calculée, pour une configuration d'allocation donnée, à partir des fidélités de chaque opération sur les qubits physiques ayant lieu lors de l'implémentation de l'algorithme quantique.

Dans la présente description, la fidélité d'une configuration d'allocation désigne la fidélité de l'algorithme quantique pour cette configuration d'allocation.

La fidélité permet de caractériser l'efficience d'une configuration d'allocation obtenue avec le procédé selon la présente description. Cela permet, en outre, de comparer l'efficience du procédé selon la présente description par rapport à d'autres procédés de l'état de l'art.

Selon un ou plusieurs modes de réalisation, des étapes comprenant l'allocation d'un premier qubit logique, la procédure itérative d'allocation des qubits logiques restant à allouer et le calcul d'une fidélité sont répétées plusieurs fois pour obtenir une pluralité de configurations d'allocation avec chacune une fidélité, le procédé comprenant en outre :
- le choix d'une configuration ayant une plus grande fidélité parmi ladite pluralité de configurations d'allocation.

Il est donc possible de répéter plusieurs fois le procédé, ou des étapes du procédé pour obtenir plusieurs configurations d'allocation avec des fidélités différentes, puis de choisir avantageusement la configuration correspondant à une fidélité la plus grande.

Il est aussi possible de répéter plusieurs fois le procédé, ou des étapes du procédé pour obtenir plusieurs configurations d'allocation avec des fidélités différentes et des nombres d'opérations d'échange différents, puis de choisir avantageusement une configuration en fonction des fidélité et nombre d'opérations d'échange.

Selon un ou plusieurs modes de réalisation, ledit premier qubit physique est un qubit physique le plus proche d'un centre géométrique du registre quantique.

Cela permet de maximiser le nombre de qubits physiques candidats disponibles pour les allocations d'autres qubits logiques de l'algorithme quantique.

Selon un ou plusieurs modes de réalisation, le nombre de qubits logiques dudit algorithme quantique alloués à des qubits physiques du processeur quantique est supérieur ou égal à environ 50.

Selon un ou plusieurs modes de réalisation, le nombre de qubits physiques dudit processeur quantique est supérieur ou égal à environ deux fois le nombre de qubits logiques dudit algorithme quantique.

Pour qu'un algorithme quantique soit implémenté dans un processeur quantique, on cherchera à avoir un nombre de qubits physiques du processeur supérieur ou égal au nombre de qubits logiques à allouer de l'algorithme quantique. Il peut en particulier être avantageux d'avoir un nombre de qubits physiques au moins supérieur ou égal à environ deux fois le nombre de qubits logiques afin d'augmenter le nombre de configurations d'allocation possibles des qubits logiques à des qubits physiques du processeur.

Selon un ou plusieurs modes de réalisation, l'un et/ou l'autre desdits premier et deuxième choix aléatoires sont effectués en utilisant une distribution de probabilité parmi les suivantes : distribution exponentielle, distribution de Poisson, distribution linéaire par morceaux, distribution constante par morceaux, loi Beta, loi Gamma, loi de Lévy.

Selon un ou plusieurs modes de réalisation, ledit score et calculé, en outre, à partir d'une pondération des opérations logiques, ladite pondération étant choisie en fonction du type d'opération logique entre ledit qubit logique candidat et les qubits logiques déjà alloués aux qubits physiques liés, dans le graphe de connectivité, audit qubit physique candidat.

Le déposant a montré que la pondération permet d'imposer une hiérarchie d'importance entre des types d'opérations logiques de l'algorithme.

Selon un ou plusieurs modes de réalisation, ledit algorithme quantique est parmi les suivants : algorithme de Shor, algorithme de Grover, algorithme QAOA (Quantum Approximate Optimization Algorithm), algorithme VQE (Variational Quantum Eigensolver), transformée de Fourier quantique, algorithme HHL (Harrow, Hassidim, Lloyd).

Le déposant a montré que le procédé selon la présente description permet l'allocation de qubits logiques d'un algorithme quantique à différents types de qubits physiques, par exemple des atomes neutres, des ions ou des circuits supraconducteurs.

Le déposant a montré que le procédé selon la présente description permet l'allocation de qubits logiques d'un algorithme quantique à des qubits physiques agencés selon une architecture décrite par un diagramme non-dirigé.

Selon un ou plusieurs modes de réalisation, le nombre d'atomes neutres de ladite architecture est supérieur ou égale à environ 100.

Selon un deuxième aspect, la présente description concerne un procédé d'optimisation d'une architecture d'un processeur quantique à atomes neutres comprenant :
- la mise en oeuvre, pour plusieurs architectures du processeur quantique, du procédé d'allocation selon le premier aspect dans lequel lesdits qubits physiques sont des atomes neutres ; et
- la comparaison desdites architectures en fonction d'un nombre d'opérations d'échange. Selon un troisième aspect, la présente description concerne un procédé d'optimisation d'une architecture d'un processeur quantique à atomes neutres comprenant :
- la mise en oeuvre, pour plusieurs architectures du processeur quantique, du procédé d'allocation selon le premier aspect dans lequel lesdits qubits physiques sont des atomes neutres ; et
- la comparaison desdites architectures en fonction d'une fidélité.

Le déposant a montré qu'il est possible d'utiliser le procédé pour comparer différentes architectures d'un registre quantique pour l'implémentation d'un algorithme quantique donné. Dans ce but, le procédé selon le premier aspect est utilisé plusieurs fois pour allouer les qubits logiques d'un algorithme quantique donné à une pluralité de graphes de connectivité correspondant à une pluralité d'architectures différentes d'un registre quantique. Les configurations d'allocation obtenues avec le procédé sont ensuite comparées en calculant un nombre d'opérations d'échange ou une fidélité correspondant à chaque configuration.

De façon avantageuse, l'architecture du registre quantique correspondant à une configuration avec le plus petit nombre d'opérations d'échange et/ou ou la plus grande fidélité est choisie pour implémenter l'algorithme quantique. Cela permet d'optimiser une architecture d'un registre quantique en fonction de l'algorithme quantique que l'on veut implémenter avec le processeur quantique.

Selon un quatrième aspect, la présente description concerne un programme informatique comprenant des instructions de code de programme pour l'exécution des étapes d'un procédé selon le premier aspect, lorsque ledit programme informatique est exécuté par un processeur de données.

Selon un cinquième aspect, la présente description concerne un système de traitement quantique de données comprenant :
- un système expérimental comprenant des qubits physiques agencés selon une architecture donnée ; et
- un processeur classique configuré pour la mise en oeuvre des étapes d'un procédé selon le premier aspect.

### Brève description des figures

D'autres avantages et caractéristiques de l'invention apparaîtront à la lecture de la description, illustrée par les figures suivantes :
[Fig. 1], représente un exemple d'un processeur quantique selon la présente description ;
[Fig. 2], représente un organigramme d'un exemple de procédé d'allocation de qubits logiques d'un algorithme quantique à des qubits physiques d'un registre quantique, selon la présente description ;
[Fig. 3], représente un exemple d'une architecture d'un registre quantique et un graphe de connectivité établi à partir de ladite architecture, selon la présente description ;
[Fig. 4], représente un exemple d'un circuit logique définissant un algorithme quantique et un graphe des opérations logiques établi à partir dudit circuit logique, selon la présente description ;
[Fig. 5], représente des exemples de graphes de connectivité illustrant un procédé d'allocation de qubits logiques d'un algorithme quantique à des qubits physiques d'un processeur quantique, selon la présente description.

### Description détaillée de l'invention

La présente description est faite par référence à des fonctions, unités fonctionnelles, entités, schémas blocs et organigrammes qui décrivent différents modes de réalisation de procédés, systèmes et programmes. Chaque fonction, unité fonctionnelle, entité, étape d'un organigramme peut être mise en oeuvre par logiciel, hardware, firmware, microcode ou toute combinaison appropriée de ces technologies. Lorsqu'un logiciel est utilisé, les fonctions, unités fonctionnelles, entités ou étapes peuvent être mises en oeuvre par des instructions de programme d'ordinateur ou du code logiciel. Ces instructions peuvent être stockées ou transmises vers un support de stockage lisible par un ordinateur et/ou être exécutées par un ordinateur afin de mettre en oeuvre ces fonctions, unités fonctionnelles, entités ou étapes

Les différents modes de réalisation et aspects décrits ci-dessous peuvent être combinés ou simplifiés de multiples manières. En particulier, les étapes des différents procédés peuvent être répétées, exécutées en parallèle ou exécutées par différentes entités informatiques.

Seuls certains modes de réalisation d'exemples sont décrits en détail pour assurer la clarté de l'exposé mais ces exemples ne visent pas à limiter la portée générale des principes ressortant de cette description considérée dans son ensemble.

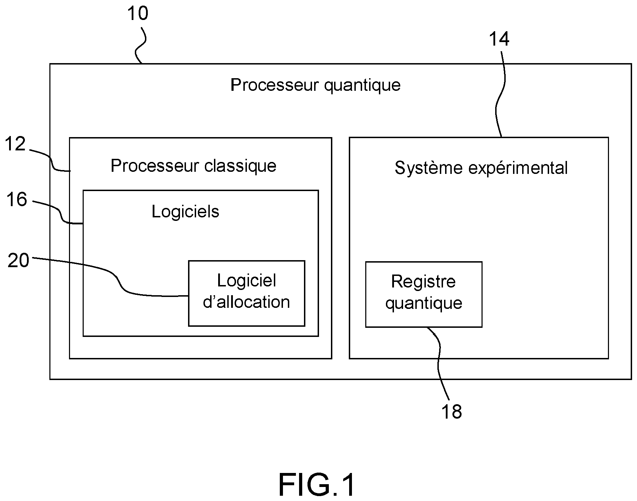

La FIG. 1 représente de manière schématique un exemple de réalisation d'un système 10 de traitement quantique de données (aussi appelée processeur quantique ou QPU d'après l'expression anglaise « Quantum Processing Unit »).

Dans un ou plusieurs modes de réalisation, le système 10 comprend un processeur classique 12 (ci-après « ordinateur ») et un système expérimental 14. Le système 10 est configuré pour traiter des données de manière quantique en utilisant l'ordinateur 12 et le système expérimental 14. Les données à traiter sont mises en forme et fournies au système expérimental 14 via l'ordinateur 12. Une fois traitées par le système expérimental 14, les données sont reçues par l'ordinateur 12 où elles peuvent être utilisées ou fournies à un utilisateur du système 10.

Le système expérimental 14 est un ensemble de moyens expérimentaux configurés pour manipuler individuellement des entités physiques réparties selon une certaine architecture et dont il est possible d'utiliser l'état quantique comme support d'information afin d'implémenter en pratique l'algorithme quantique. Ces entités physiques sont appelées qubits physiques.

On appelle registre quantique l'ensemble de ces entités physiques (référencé 18 sur la Fig. 1). Selon un ou plusieurs modes de réalisation, les qubits physiques sont des atomes neutres, par exemple, et de façon non limitative, des atomes de Rubidium, de Strontium, d'Ytterbium, de Caesium ou de Calcium.

Le système expérimental 14 peut alors être un système de piégeage d'atomes individuels à l'aide de pinces optiques. Un tel système de piégeage peut par exemple comprendre de façon connue, une chambre à vide, un cryostat, des composants optiques actifs et passifs, des systèmes magnétiques et des systèmes électroniques.

Dans d'autres exemples de réalisation, les qubits physiques peuvent être des ions piégés, des qubits supraconducteurs à base de jonction Josephson, ou des qubits sur matériaux semiconducteurs, par exemple sur du Silicium.

L'ordinateur 12 comprend généralement des programmes informatiques ou logiciels 16 configurés pour contrôler l'implémentation d'un algorithme quantique dans le registre quantique 18 et comprend notamment un logiciel 20 d'allocation configuré pour la mise en oeuvre d'un procédé 200 d'allocation de qubits logiques de l'algorithme quantique à des qubits physiques du registre quantique 18. Une fois implémenté dans le registre quantique 18, l'algorithme quantique peut être appliqué aux données.

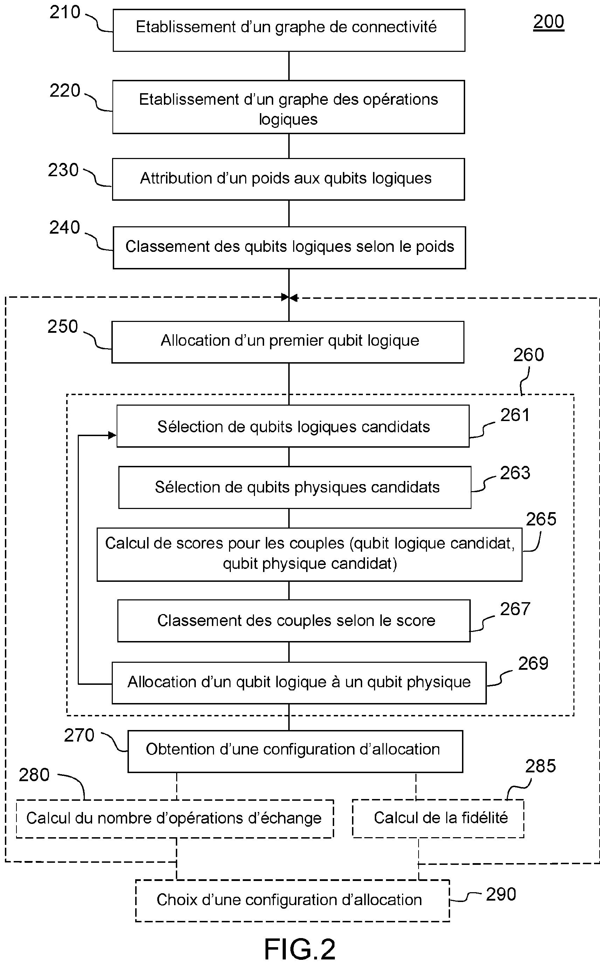

La FIG. 2 représente un exemple de réalisation d'un procédé 200 d'allocation de qubits logiques d'un algorithme quantique à des qubits physiques d'un processeur quantique selon la présente description. Bien que les étapes de ce procédé soient présentées de manière séquentielle, certaines au moins de ces étapes peuvent être omises ou bien être exécutées dans un ordre différent ou bien être exécutées en parallèle ou encore combinées pour ne former qu'une seule étape.

Le procédé 200 vise à allouer, soit l'intégralité des qubits logiques de l'algorithme quantique, sois une pluralité de qubits logiques parmi les qubits logiques de l'algorithme, à une pluralité de qubits physiques du processeur quantique parmi la totalité des qubits physiques du processeur quantique (qui forment le registre quantique).

Une telle allocation correspond à un choix d'une correspondance entre chacun des qubits logiques à allouer et un qubit physique ; ainsi, à l'issue de l'allocation, le nombre de qubits physiques alloués est égal au nombre de qubits logiques alloués.

Lorsque le procédé 200 vise à allouer une pluralité de qubits logiques de l'algorithme quantique, les qubits logiques de la pluralité sont des qubits logiques intervenant dans une partie tronquée de l'algorithme quantique comprenant uniquement un nombre de portes logiques donné. Dans ce cas, à l'issue du procédé 200, les qubits logiques n'ayant pas été alloués, c'est à dire les qubits logiques intervenant dans le reste de l'algorithme peuvent par exemple être alloués par d'autres procédés d'allocation.

Dans un ou plusieurs modes de réalisation, le nombre de qubits physiques du processeur quantique 10 est supérieur à deux fois le nombre de qubits logiques de l'algorithme quantique. Dans un ou plusieurs modes de réalisation, le nombre de qubits physiques du processeur quantique 10 est supérieur ou égal à 50, de façon préférentielle supérieur ou égal à 100, de façon préférentielle supérieur à 500.

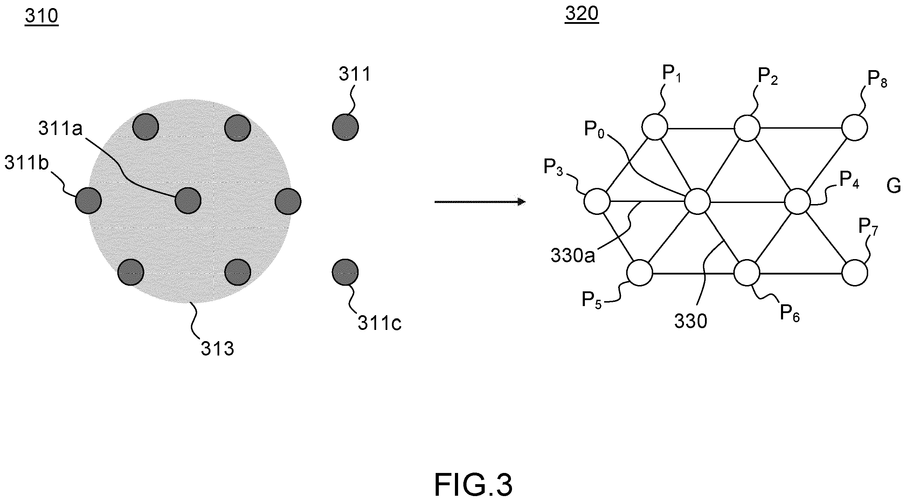

Dans une première étape 210, un graphe de connectivité est établi à partir de l'architecture d'agencement des qubits physiques du registre quantique dans lequel l'algorithme quantique est destiné à être implémenté. Un exemple d'un graphe de connectivité sera décrit plus en détails en référence à la FIG. 3.

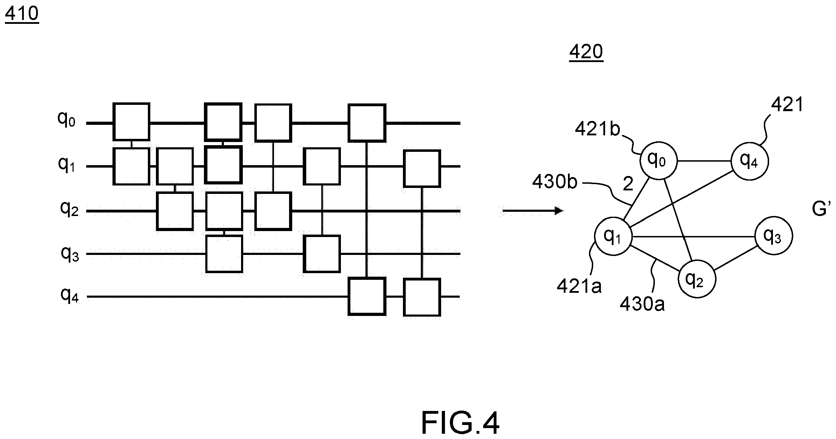

Dans une deuxième étape 220, un graphe des opérations logiques est établi à partir de l'algorithme quantique destiné à être implémenté dans le registre quantique. Un exemple d'un graphe des opérations logiques sera décrit plus en détails en référence à la FIG. 4.

Dans le cas où le procédé 200 est utilisé pour allouer uniquement une pluralité de qubits logiques correspondant à une partie tronquée de l'algorithme quantique, le graphe des opérations logiques est établi à partir de la partie tronquée de l'algorithme.

Dans une troisième étape 230, un poids est attribué aux qubits logiques du graphe des opérations logiques. Le poids est une valeur entière qui est attribuée à chaque qubit logique du graphe des opérations logiques. Le poids d'un qubit logique est égal au nombre total d'opérations logiques dans lequel intervient le qubit logique au sein de l'algorithme quantique ou de la partie tronquée de l'algorithme quantique. Le poids permet donc d'établir une hiérarchie d'importance entre les possibles qubits logiques à allouer et de déterminer lesquels sont les plus préférables pour la première allocation.

Dans une quatrième étape 240, les qubits logiques du graphe des opérations logiques sont classés selon leurs poids, par exemple par ordre décroissant de poids, pour former une liste ordonnée de qubits logiques. Lorsque plusieurs qubits logiques présentent le même poids, ils sont classés au même niveau dans la liste.

Dans une cinquième étape 250, un premier qubit logique est choisi et alloué à un premier qubit physique du graphe de connectivité.

Le premier qubit logique est choisi, parmi les qubits logiques du graphe des opérations logiques, par un premier choix aléatoire favorisant un qubit logique ayant un poids le plus grand.

En pratique, le premier choix aléatoire est effectué à l'aide d'une distribution probabiliste (aussi appelée distribution aléatoire) pour choisir, parmi la liste ordonnée de qubits logiques établi à l'étape 240, un premier qubit logique à allouer.

Par exemple, un indice d'une liste de qubits logiques ordonnés par ordre décroissant de poids est tiré selon une distribution aléatoire décroissante. Le qubit logique correspondant à l'indice tiré est le qubit choisi parmi la liste ordonnée de qubit logique possible. L'utilisation d'une distribution aléatoire décroissante favorisera le tirage des qubits logiques classés au début de la liste par rapport aux qubits logiques classés à la fin de la liste. Comme la liste est ordonnée par ordre décroissant de poids, les qubits logiques classés au début de la liste sont aussi ceux qui ont un plus grand poids.

Le premier qubit physique peut être choisi de différentes manières. En particulier, le premier qubit physique peut être choisi en sélectionnant un qubit physique qui est le plus proche du centre géométrique du graphe de connectivité.

Lorsque plusieurs qubits physiques sont le plus proche du centre géométrique du graphe de connectivité, chacun des qubits physiques peut être choisi comme premier qubit physique.

Le procédé d'allocation 200 comprend également une étape de procédure itérative 260, dans laquelle des étapes référencées 261, 263, 265, 267 et 269 sur la FIG. 2 sont répétées plusieurs fois jusqu'à l'allocation du dernier qubit logique à allouer parmi l'intégralité des qubits logiques de l'algorithme quantique ou parmi la pluralité de qubits logiques de l'algorithme quantique.

Lors de l'étape 261, il y a sélection d'un ou plusieurs qubits logiques candidats parmi les qubits logiques qui n'ont pas été alloués à un qubit physique.

Le ou les qubits logiques candidats sélectionnés sont les qubits logiques qui interviennent dans une opération logique quantique commune avec un qubit logique déjà alloué, par exemple avec le premier qubit logique. Ainsi, du fait de la construction du graphe des opérations logiques, les qubits logiques candidats sont les qubits logiques qui ont au moins un lien avec les qubits logiques déjà alloués dans le graphe des opérations logiques.

Lors de l'étape 263, il y a sélection d'un ou plusieurs qubits physiques candidats parmi les qubits physiques du graphe de connectivité auxquels il n'a pas été alloué de qubit logique (aussi appelé « qubits physiques non-alloués » dans la présente description).

Le ou les qubits physiques candidats sélectionnés sont les qubits physiques qui peuvent interagir avec au moins un des qubits physiques auxquels des qubit logiques ont été alloués, par exemple le premier qubit physique. Du fait de la construction du graphe de connectivité, les qubits physiques candidats sont les qubits physiques qui sont liés à au moins un qubit physique auquel un qubit logique a été alloué.

Dans le cas d'un registre quantique caractérisé par un rayon de blocage, les qubits physiques candidats sont en particulier les qubits physiques situés environ à une distance inférieure (ou égale) au rayon de blocage d'au moins un qubit physique auquel un qubit logique a été alloué. Lors de l'étape 265, un score *S(q, p)* est associé à chaque couple *(q, p)* comprenant un qubit logique candidat *q* et un qubit physique candidat *p.* Pour un ensemble de *n* qubits logiques candidats et *m* qubits physiques candidats, il existe donc *n*m* couples associés à *n*m* scores. Le score *S(q, p)* est égal au nombre d'opérations logiques entre ledit qubit logique candidat et les qubits logiques déjà alloués aux qubits physiques liés dans le graphe de connectivité audit qubit physique candidat.

Le score *S(q, p)* correspond aussi au nombre d'opérations logiques de l'algorithme qui peuvent effectivement être réalisées par une seule interaction entre qubits physiques dans le registre quantique si *q* est alloué à *p.* Le score est donc lié au nombre hypothétique d'opérations d'échange qu'il faudrait introduire si *q* n'était pas alloué à *p*.

Le score permet donc de hiérarchiser les allocations les plus préférables vis-à-vis des opérations d'échange et donc de l'efficience de l'implémentation de l'algorithme quantique.

En particulier, si un score *S* obtenu pour un couple *(q, p)* est strictement supérieur à un score S' obtenu pour un couple (*q',p*), il est préférable d'allouer *q* à *p* plutôt que d'allouer *q'* à *p*'. Par ailleurs, si le score S est égal au score *S'*, il est aussi préférable d'allouer *q* à *p* que d'allouer *q'*à *p'.*

Le déposant a montré qu'il est aussi possible d'introduire une pondération du score, c'est-à-dire une modification du score par un facteur, en fonction des types d'opérations logiques entre ledit qubit logique candidat et les qubits logiques déjà alloués aux qubits physiques liés dans le graphe de connectivité audit qubit physique candidat. Le facteur traduit, par exemple, l'importance plus ou moins grande d'une porte logique parmi les portes logiques de l'algorithme quantique. Si une porte est importante, il peut en particulier être judicieux que la réalisation physique de cette porte logique dans le processeur quantique ne fasse pas intervenir d'opération d'échanges lors de l'implémentation de l'algorithme quantique.

Lors de l'étape 267, les couples de qubits candidats sont classés selon leurs scores pour former une liste ordonnée de couples candidats et ainsi établir une hiérarchie entre les allocations les plus préférables. Par exemple les couples de qubits candidats sont classés par ordre décroissant de score.

Les étapes 265, 267 permettent avantageusement d'indiquer les allocations préférables pour réduire le nombre d'opérations d'échange. Un avantage des étapes 265, 267 est de prendre en compte le résultat des allocations déjà effectuées pour choisir les allocations suivantes.

Cette prise en compte de l'historique des allocations est donc particulièrement synergique avec le fait que les étapes 261, 263, 265, 267, 269 forment une procédure 260 itérative répétée une pluralité de fois jusqu'à l'allocation du dernier qubit logique de l'algorithme quantique (ou du dernier qubit logique de la pluralité de qubits logiques à allouer).

Lors de l'étape 269, un qubit logique candidat *q* est alloué à un qubit physique candidate, *p*, *q* et *p* appartenant à un couple *(q,p)* choisi.

Le couple choisi est choisi par un deuxième choix aléatoire favorisant un couple ayant un plus grand score parmi la liste ordonnée de couples candidats établie à l'étape 267.

En pratique, le deuxième choix aléatoire est effectué à l'aide d'une distribution de probabilité. Dans un ou plusieurs modes de réalisation, le choix aléatoire de l'étape 269 (deuxième choix aléatoire) utilise les mêmes distributions que le choix aléatoire de l'étape 250 (premier choix aléatoire).

Par exemple, une distribution aléatoire décroissante est utilisée pour tirer un couple candidats parmi une liste de couples candidats ordonnée par ordre décroissant de score.

Le choix aléatoire de l'étape 269 confère donc un caractère aléatoire à l'étape 269 qui permet de pouvoir obtenir des allocations différentes bien que la procédure 200 soit utilisée pour allouer les qubits logiques d'un même algorithme (ou d'une même pluralité de qubits logiques d'un algorithme) à des qubits physiques d'un même processeur.

Ceci distingue en particulier le procédé selon la présente description des procédés de l'état de l'art, notamment des procédés déterministes divulgués dans *Siraichi et* al.

A l'issu de la procédure itérative 260, c'est-à-dire lorsque tous les qubits logiques de l'algorithme quantique, ou tous les qubits logiques d'une pluralité de qubits logiques de l'algorithme, ont été alloués à des qubits physiques du processeur quantique, une configuration d'allocation est obtenue (étape 270).

De façon optionnelle, lors de l'étape 280, un nombre d'opérations d'échange pour la configuration d'allocation obtenue est calculé. Le nombre d'opérations d'échange caractérise l'efficience d'une configuration d'allocation donnée.

Ainsi, une configuration d'allocation *C1* ayant un nombre d'opérations d'échange strictement inférieur à une configuration d'allocation *C2* signifie que la configuration d'allocation *C1* est plus efficiente que la configuration d'allocation *C2,* et vice-versa.

Ceci s'explique du fait que, plus une configuration d'allocation a un nombre d'opérations d'échange élevé, plus les possibilités d'erreurs dans l'implémentation de l'algorithme quantique sont multipliées.

De façon alternative ou supplémentaire à l'étape 280, il est possible de caractériser l'efficience d'une configuration d'allocation par un calcul 285 de fidélité.

La fidélité est un nombre entre 0 et 1 qui quantifie une mesure de proximité du résultat de l'algorithme quantique par rapport au résultat qui serait obtenu avec un processeur idéal dans lequel toutes les interactions entre qubits physiques sont parfaites et sans erreurs. Plus la fidélité est proche de 1, plus la configuration d'allocation correspondante est efficiente.

Pour une configuration d'allocation, plus le nombre d'opérations d'échange est grand, plus cela augmente la possibilité d'avoir des erreurs lors de l'implémentation de l'algorithme quantique par rapport à ce qu'il se passerait dans un processeur idéalement parfait, dégradant ainsi la fidélité. La fidélité peut donc être une autre manière d'évaluer le nombre d'opérations d'échange d'une configuration d'allocation.

En pratique, pour évaluer la fidélité d'une configuration d'allocation, les interactions entre qubits physiques matérialisant l'effet des portes quantiques peuvent être calibrées expérimentalement et la fidélité individuelle de chaque porte mesurée. Les fidélités individuelles sont ensuite multipliées pour obtenir la fidélité caractérisant la configuration d'allocation.

Il n'est pas toujours possible de calibrer expérimentalement toutes les interactions entre qubits physiques ayant lieu lors de l'implémentation de l'algorithme. La fidélité peut donc parfois être estimée à partir du nombre d'opérations d'échange. Par exemple, on considère que l'ajout d'une opération d'échange correspond à une modification d'une fidélité de référence choisie au préalable par un facteur *f*, et donc que l'ajout de *k* opérations d'échange correspond à une dégradation de la fidélité de référence par un *facteur f^k.*

Du fait du caractère aléatoire des étapes 250, 269, il peut être particulièrement avantageux de répéter l'étape 250 et la procédure itérative 260 plusieurs fois pour essayer plusieurs configurations d'allocation, puis d'effectuer un choix 290 déterministe d'une meilleure configuration, basé sur le calcul 280 du nombre d'opérations d'échange ; ou le calcul 285 de fidélité ; ou sur une combinaison des calculs 280, 285.

La FIG. 3 représente à titre d'illustration un exemple d'architecture 310 d'un registre quantique et un exemple d'un graphe de connectivité 320, noté G, associé à ladite architecture 310. L'architecture 310 d'un registre quantique est une représentation schématique de l'agencement géométrique des qubits physiques 311 du registre quantique. Cet agencement dépend en particulier des contraintes expérimentales du registre quantique.

Dans le cas d'un registre quantique comprenant des atomes neutres, les atomes neutres peuvent être placés sur différentes types de réseaux à 2 dimensions (par exemple des réseaux à maille carrée, hexagonale ou triangulaire) et de réseaux à 3 dimensions.

Par exemple, dans le cas d'un registre quantique comprenant des atomes neutres sur un réseau 2D, les contraintes à respecter dans l'agencement sont :
- une distance minimale entre deux atomes voisins d'environ 2 à 3 microns ; et
- une surface occupée par l'intégralité des atomes du registre qui est contenue dans un cercle d'au maximum quelques centaines de microns, préférablement cent microns.

Dans certains cas, il est possible de faire varier (ou « reconfigurer ») l'agencement géométrique en faisant varier des paramètres expérimentaux du registre quantique.

La possibilité de reconfigurer l'agencement est pour l'instant un avantage des registres quantiques comprenant des atomes neutres. Les registres comprenant des qubits supraconducteurs ont leur géométrie fixée lors de leur fabrication et les registres comprenant des ions piégés sont monodimensionnels.

Dans un registre quantique, les distances géométriques entre qubits physiques peuvent empêcher des interactions entre qubits physiques, on peut donc définir un rayon de blocage (rayon du disque 313) au-delà duquel deux qubits physiques ne peuvent plus interagir.

Dans l'exemple de la FIG. 3, les qubits physiques 311 sont agencés selon un réseau 2D à maille triangulaire. Le qubit physique 311*a* peut interagir avec les qubits physiques inclus au moins partiellement dans le disque 313, dont le rayon est égal au rayon de blocage, mais pas avec les qubits physiques à l'extérieur du disque 313. En particulier, le qubits physique 311*a* peut interagir avec le qubit physique 311*b* mais ne peut pas interagir avec le qubit physique 311c. Afin de représenter de façon schématique à la fois les positions des qubits physiques 311 selon l'architecture 310 et les possibilités d'interaction entre qubits physiques, on établit à partir de l'architecture 310 un graphe de connectivité 320. Le graphe de connectivité 320 comprend des noeuds 321 et des liens 330. Les noeuds 321 représentent les qubits physiques de l'architecture 310. Les liens 330 représentent les possibilités d'interaction entre deux qubits physiques 321. Comme illustré sur la FIG. 3, il y a une correspondance un à un entre les qubits physiques 311 de l'architecture 310 et les noeuds 321 du graphe de connectivité 320 ; ainsi, dans la présente description, on utilisera aussi le terme qubit physique pour désigner un noeud. Par ailleurs, les positions des qubits physiques étant fixes pour une architecture donnée d'un registre quantique, on parlera indifféremment d'un qubit physique ou de la position d'un qubit physique pour une architecture donnée.

Si l'architecture du registre est modifiée, c'est-à-dire si les positions des entités physiques dans le registre sont modifiées, alors les contraintes d'interaction entre entités physiques changent et on cherchera à établir un nouveau graphe de connectivité et à résoudre de nouveau le problème d'allocation pour la nouvelle architecture.

Ainsi, dans l'exemple de graphe de connectivité 320 de la FIG. 3, il y a un lien 330a entre les qubits physiques p0 et p3, ce qui signifie qu'il y a une interaction possible entre les qubits physiques p0 et p3. En revanche, il n'existe pas de liens entre les qubits physiques p0 et p7, ce qui signifie qu'il n'y a pas d'interaction possible entre ces deux qubits physiques. Si l'on veut réaliser physiquement une porte impliquant des qubits logiques alloués à p0 et p7, il faudra donc utiliser des opérations d'échange avec des qubits physiques auxiliaires. Les qubits physiques auxiliaires utilisés dans les opérations d'échange doivent former une chaîne de qubits physiques liés allant de p0 à p7. Par exemple, il est possible d'utiliser deux opérations d'échange : une première opération d'échange entre les qubits physiques p0 et p6, et une deuxième opération d'échange entre les qubits physiques p6 et p7.

La FIG. 4 représente à titre d'illustration un exemple d'un circuit 410 logique définissant un algorithme quantique et un graphe 420 des opérations logiques établi à partir dudit circuit 410 logique, selon la présente description.

Un circuit logique comme le circuit 410 est un diagramme illustrant la décomposition d'un algorithme quantique en une séquence successives de portes logiques quantiques appliquées à des qubits logiques.

Dans l'exemple de la FIG. 4, le circuit logique définit un algorithme quantique comprenant 5 qubits logiques et 8 portes logiques quantiques.

Lorsque le procédé 200 selon la présente description est utilisé pour allouer seulement une pluralité de qubits logiques d'un algorithme quantique à des qubits logiques d'un processeur quantique, la pluralité de qubits logiques peut être choisie en sélectionnant les qubits logiques d'une partie tronquée de l'algorithme quantique dans le circuit 410, par exemple une partie tronquée de la FIG. 4 qui comprend les 5 premières portes logiques quantiques et qui ne fait donc intervenir uniquement que 4 qubits logiques parmi les 5 qubits logiques de l'algorithme. Dans le graphe 420 des opérations logiques, noté G', les noeuds 421 représentent les qubits logiques intervenant dans l'algorithme quantique et les liens 430 représentent les portes logiques quantiques collectives entre les qubits logiques.

Dans l'exemple de graphe 420 des opérations logiques de la FIG. 4 ; il existe un lien 430*a* entre les qubits q1 et q2 ce qui indique que les qubits q1 et q2 interviennent dans une porte collective de l'algorithme. En revanche il n'existe pas de lien entre les qubits q0 et q3, ce qui indique que les qubits q0 et q3 n'interviennent pas dans une porte collective de l'algorithme.

Lorsque deux qubits logiques interviennent plusieurs fois ensemble dans des portes collectives, plutôt que de représenter plusieurs liens entre ces deux qubits logiques, un nombre est inscrit à côté du lien entre ces deux qubits logiques pour indiquer le nombre de portes collectives dans lesquels ces qubits logiques interviennent ensemble. C'est le cas pour les qubits logiques q0 et q1 qui interviennent dans deux portes logiques collectives, et donc pour lesquels un nombre « 2 » est inscrit à côté du lien 430b.

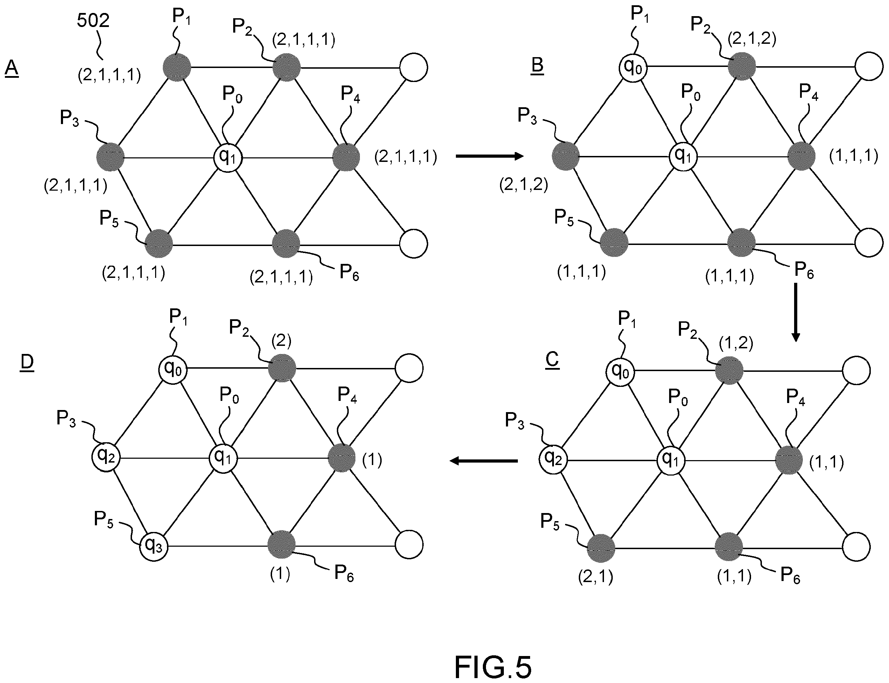

La FIG. 5 représente des exemples de graphes de connectivité annotés illustrant un procédé 200 d'allocation tel que décrit en référence à la Fig. 2, appliqué à l'allocation des qubits logiques de l'algorithme quantique décrit par le graphe des opérations logiques 420 de la FIG. 4, dans un processeur quantique d'architecture décrite par le graphe de connectivité 320 de la FIG. 3.

En particulier, dans la FIG. 5, quatre graphes de connectivité (A, B, C, D) sont annotés pour représenter la configuration d'allocation à différentes étapes du procédé 200 d'allocation. Le graphe A correspond à une configuration d'allocation après l'étape 250.

Le graphe B correspond à une configuration d'allocation après une seule itération de la procédure 260 itérative (c'est-à-dire que les étapes 261, 263, 265, 267, 269 de la procédure 260 ont été effectuées une seule fois chacune).

Le graphe C correspond à une configuration d'allocation après deux itérations de la procédure 260 itérative.

Le graphe D correspond à une configuration d'allocation après trois itérations de la procédure 260 itérative.

Le graphe A représente la configuration la plus probable après l'étape 250 car le qubit logique q1 est le plus connecté dans le graphe 420 et a ainsi le plus de chance d'être choisi lors de l'étape 250. De plus, le qubit physique p0 peut être choisi car il est un des plus proches du centre géométrique du graphe 320 de connectivité.

Les qubits logiques candidats sont les qubits liés à q1 dans le graphe 420, c'est-à-dire les qubits logiques q0, q2, q3, q4.

Les qubits physiques candidats pour l'allocation du prochain qubit logique parmi les qubits logiques candidats sont les qubits physiques reliés au qubit physique auquel q1 a été alloué, c'est-à-dire les qubits physiques reliés à p0, qui sont représentés en gris : p1, p2, p3, p4, p5, p6.

Pour chaque position pᵢ des qubits physiques candidats, les scores associés aux différents couples possibles avec les qubits logiques candidats (q0, q2, q3, 4) sont représentés entre parenthèses dans cet ordre.

Par exemple, les scores 502 des couples comprenant p1, c'est-à-dire les scores des couples (q0, p1), (q2, p1), (q3, p1) et (q4, p1) sont indiqués par (2, 1, 1, 1). Cela indique que le couple (q0, p1) a un score de 2, le couple (q2, p1) a un score de 1, le couple (q3, p1) a un score de 1 et le couple (q4, p1) a un score de 1.

En particulier, le score du couple (q0, p1) est de 2 car, dans le graphe 420, le qubit logique q0 est lié deux fois au qubit logique alloué à p0, c'est à dire au qubit logique q1.

Les autres scores des couples comprenant respectivement, p2, p3, p4, p5 et p6 sont calculés de la même manière et représentés autours des autres qubits physiques candidats. Il est visible que 6 couples présentent un même plus grand score égal à 2 : (q0, p1) ; (q0, p2), (q0, p3), (q0, p4), (q0, p5), (q0, p6). Ainsi tous ces couples auront la même probabilité d'être choisi. Cela implique en pratique que le qubit logique candidat q0 aura le plus de chance d'être alloué (car il est présent dans tous les couples ayant le plus grand score) mais que les qubits physiques candidats (p1, p2, p3, p4, p5, p6) auront tous une chance équivalente d'être choisi.

Le graphe B représente donc une configuration dans laquelle q0 a été alloué à p1, qui est une des configurations les plus probables après avoir effectué la procédure 460 étant donné la configuration du graphe A et les scores correspondant aux différents couples.

Selon un même principe, le graphe C représente une configuration probable dans laquelle q2 a été alloué à p3, après avoir effectué la procédure 260 une deuxième fois, à partir de la configuration du graphe B.

Selon un même principe, le graphe D représente une configuration probable dans laquelle q3 a été alloué à p5, après avoir effectué la procédure 260 une troisième fois, à partir de la configuration du graphe C.

Sur le graphe D, les scores indiquent qu'il est probable qu'une nouvelle application de la procédure 260 résulte en l'allocation de q4 à p2.

Les étapes de la procédure itérative d'allocation seront reproduites jusqu'à l'allocation du dernier qubit logique restant à allouer. En particulier, si l'on souhaite allouer l'intégralité des qubits logiques de l'algorithme quantique défini à la FIG. 4, la procédure d'allocation sera répétée une fois.

Bien que décrite à travers un certain nombre d'exemples de réalisation, les procédés d'allocation de qubits logiques selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Procédé (200) d'allocation de qubits logiques d'un algorithme quantique à des qubits physiques d'un processeur quantique agencés selon une architecture donnée, ledit procédé étant mis en oeuvre par un ordinateur et comprenant :
- l'établissement (210), à partir de ladite architecture, d'un graphe de connectivité (G), chaque noeud dudit graphe représentant une position d'un qubit physique et chaque lien représentant une possibilité d'interaction entre deux qubits physiques ;
- l'établissement (220), à partir dudit algorithme quantique, d'un graphe des opérations logiques (G'), chaque noeud dudit graphe représentant un qubit logique et chaque lien dudit graphe représentant une porte logique quantique entre deux qubits logiques ;
- l'attribution (230) d'un poids à chaque qubit logique dudit graphe des opérations logiques (G'), déterminé en fonction du nombre total de portes logiques faisant intervenir ledit qubit logique ;
- le classement (240) des qubits logiques selon le poids ;
- l'allocation (250) d'un premier qubit logique à un premier qubit physique du processeur quantique, ledit premier qubit logique étant choisi par un premier choix aléatoire favorisant un qubit logique ayant un poids le plus grand ;
- une procédure itérative (260) d'allocation des qubits logiques restant à allouer comprenant :
- la sélection (261) de qubits logiques candidats, lesdits qubits logiques candidats étant, parmi les qubits logiques restant à allouer, des qubits logiques liés dans le graphe des opérations logiques (G') à au moins un des qubits logiques déjà alloués ;
- la sélection (263) de qubits physiques candidats, lesdits qubits physiques candidats étant, parmi les qubits physiques restant à allouer, des qubits physiques liés dans le graphe de connectivité (G) à au moins un des qubits physiques déjà alloués ;
- pour chaque couple de qubit logique candidat et qubit physique candidat, le calcul (265) d'un score, chaque score étant déterminé, pour une allocation possible dudit qubit logique candidat audit qubit physique candidat, par le nombre d'opérations logiques entre ledit qubit logique candidat et les qubits logiques déjà alloués aux qubits physiques liés dans le graphe de connectivité (G) audit qubit physique candidat ;
- le classement (267) des couples de qubits logiques candidats et qubits physiques candidats selon le score ; et
- l'allocation (269) d'un qubit logique à un qubit physique, ledit qubit logique et ledit qubit physique étant choisis par un deuxième choix aléatoire favorisant le qubit logique candidat et le qubit physique candidat d'un couple de qubit physique candidat et qubit logique candidat ayant un plus grand score parmi lesdits couples de qubits logiques candidats et qubits physiques candidats ;
- la reproduction de ladite procédure (260) itérative d'allocation jusqu'à l'allocation du dernier qubit logique restant à allouer, résultant ainsi en l'obtention d'une configuration d'allocation de qubits logiques de l'algorithme quantique à des qubits physiques du processeur quantique.

2. Procédé selon la revendication 1, comprenant, en outre, après l'allocation du dernier qubit logique, le calcul (280) d'un nombre d'opérations d'échanges à partir de ladite configuration d'allocation.

3. Procédé selon la revendication 2, dans lequel des étapes comprenant l'allocation (250) d'un premier qubit logique, la procédure itérative (260) d'allocation des qubits logiques restant à allouer et le calcul (280) d'un nombre d'opérations d'échanges sont répétées plusieurs fois pour obtenir une pluralité de configurations d'allocation avec chacune un nombre d'opérations d'échanges, le procédé comprenant en outre :
- le choix d'une configuration ayant un plus petit nombre d'opérations d'échange parmi ladite pluralité de configurations d'allocation.

4. Procédé selon l'une quelconque des revendications précédentes, comprenant, en outre, après l'allocation du dernier qubit logique, le calcul (280) d'une fidélité de l'algorithme quantique, de préférence des étapes comprenant l'allocation (250) d'un premier qubit logique, la procédure itérative (260) d'allocation des qubits logiques restant à allouer et le calcul (285) d'une fidélité étant répétées plusieurs fois pour obtenir une pluralité de configurations d'allocation avec chacune une fidélité, le procédé comprenant en outre :
- le choix d'une configuration ayant une plus grande fidélité parmi ladite pluralité de configurations d'allocation.

5. Procédé selon l'une quelconque des revendications précédentes, dans lequel ledit premier qubit physique est un qubit physique le plus proche d'un centre géométrique du registre quantique.

6. Procédé selon l'une quelconque des revendications précédentes, dans lequel un nombre de qubits logiques dudit algorithme quantique alloués à des qubits physiques du processeur quantique est supérieur ou égale à environ 50.

7. Procédé selon l'une quelconque des revendications précédentes, dans lequel le nombre de qubits physiques dudit processeur quantique est supérieur ou égal à environ deux fois un nombre de qubits logiques dudit algorithme quantique.

8. Procédé selon l'une quelconque des revendications précédentes, dans lequel l'un et/ou l'autre desdits premier et deuxième choix aléatoires sont effectués en utilisant une distribution de probabilité parmi les suivantes : distribution exponentielle, distribution de Poisson, distribution linéaire par morceaux, distribution constante par morceaux, loi Beta, loi Gamma, loi de Lévy.

9. Procédé selon l'une quelconque des revendications précédentes, dans lequel ledit score est calculé, en outre, à partir d'une pondération des opérations logiques, ladite pondération étant choisi en fonction du type d'opération logique entre ledit qubit logique candidat et les qubits logiques déjà alloués aux qubits physiques liés dans G audit qubit physique candidat.

10. Procédé selon l'une quelconque des revendications précédentes dans lequel ledit algorithme quantique est un algorithme choisi parmi les algorithmes suivants : algorithme de Shor, algorithme de Grover, algorithme QAOA, Quantum Approximate Optimization Algorithm, algorithme VQE, Variational Quantum Eigensolver, transformée de Fourier quantique, algorithme HHL Harrow, Hassidim, Lloyd.

11. Procédé selon l'une quelconque des revendications précédentes, dans lequel lesdits qubits physiques (311) sont des atomes neutres, de préférence le nombre d'atomes neutres de ladite architecture étant supérieur ou égal à 100.

12. Procédé d'optimisation d'une architecture d'un processeur quantique à atomes neutres comprenant :
- la mise en oeuvre, pour plusieurs architectures du processeur quantique, du procédé d'allocation selon l'une quelconque des revendications 2 et 3, dans lequel lesdits qubits physiques sont des atomes neutres ; et
- la comparaison desdites architectures en fonction d'un nombre d'opérations d'échange.

13. Procédé d'optimisation d'une architecture d'un processeur quantique à atomes neutres comprenant :
- la mise en oeuvre, pour plusieurs architectures du processeur quantique, du procédé d'allocation selon la revendication 4, dans lequel lesdits qubits physiques sont des atomes neutres ; et
- la comparaison desdites architectures en fonction d'une fidélité.

14. Programme informatique comprenant des instructions de code de programme pour l'exécution des étapes d'un procédé selon l'une quelconque des revendications 1 à 11 lorsque ledit programme informatique est exécuté par un processeur de données.

15. Système (10) de traitement quantique de données comprenant :
- un système expérimental (14) comprenant des qubits physiques agencés selon une architecture donnée ; et
- un processeur classique (12) configuré pour la mise en oeuvre des étapes d'un procédé (200) selon l'une quelconque des revendications 1 à 11.

## Patentansprüche

1. Verfahren (200) zum Zuweisen von logischen Qubits eines Quantenalgorithmus zu physikalischen Qubits eines Quantenprozessors, die gemäß einer gegebenen Architektur angeordnet sind, wobei das Verfahren von einem Computer implementiert wird und Folgendes umfasst:
- Erstellen (210), anhand der Architektur, eines Konnektivitätsgraphen (G), wobei jeder Knoten des Graphen eine Position eines physikalischen Qubits darstellt und jede Verbindung eine Interaktionsmöglichkeit zwischen zwei physikalischen Qubits darstellt;
- Erstellen (220), anhand des Quantenalgorithmus, eines Graphen logischer Operationen (G'), wobei jeder Knoten des Graphen ein logisches Qubit darstellt und jede Verbindung des Graphen ein quantenlogisches Gatter zwischen zwei logischen Qubits darstellt;
- Zuordnen (230) eines Gewichts zu jedem logischen Qubit des Graphen logischer Operationen (G'), die abhängig von der Gesamtzahl der logischen Gatter, an denen das logische Qubit beteiligt ist, bestimmt wird;
- Einordnen (240) der logischen Qubits gemäß dem Gewicht;
- Zuweisen (250) eines ersten logischen Qubits zu einem ersten physikalischen Qubit des Quantenprozessors, wobei das erste logische Qubit ausgewählt wird durch eine erste Zufallsauswahl, die ein logisches Qubit bevorzugt, das ein größtes Gewicht aufweist;
- ein iteratives Verfahren (260) zum Zuweisen der noch zuzuweisenden logischen Qubits, umfassend:
- Auswählen (261) von logischen Kandidaten-Qubits, wobei die logischen Kandidaten-Qubits unter den noch zuzuweisenden logischen Qubits logische Qubits sind, die in dem Graphen logischer Operationen (G') mit mindestens einem der bereits zugewiesenen logischen Qubits verbunden sind;
- Auswählen (263) von physikalischen Kandidaten-Qubit, wobei die physikalischen Kandidaten-Qubit unter den noch zuzuweisenden physikalischen Qubits physikalische Qubits sind, die in dem Konnektivitätsgraphen (G) mit mindestens einem der bereits zugewiesenen physikalischen Qubits verbunden sind;
- für jedes Paar aus logischem Kandidaten-Qubit und physikalischem Kandidaten-Qubit, Berechnen (265) einer Punktzahl, wobei jede Punktzahl für eine mögliche Zuweisung des logischen Kandidaten-Qubits zu dem physikalischen Kandidaten-Qubit durch die Anzahl der logischen Operationen zwischen dem logischen Kandidaten-Qubit und den logischen Qubits bestimmt wird, die bereits den physikalischen Qubits zugewiesen sind, die in dem Konnektivitätsgraphen (G) mit dem physikalischen Kandidaten-Qubit verbunden sind;
- Einordnen (267) der Paare von logischen Kandidaten-Qubit und physikalischen Kandidaten-Qubit gemäß der Punktzahl; und
- Zuweisen (269) eines logischen Qubits zu einem physikalischen Qubit, wobei das logische Qubit und das physikalische Qubit ausgewählt werden durch eine zweite Zufallsauswahl, die den logischen Kandidaten-Qubit und den physikalischen Kandidaten-Qubit eines Paars von physikalischem Kandidaten-Qubit und logischem Kandidaten-Qubit begünstigt, der unter den Paaren von logischen Kandidaten-Qubits und physikalischen Kandidaten-Qubits eine höhere Punktzahl aufweist;
- Reproduzieren des iterativen Zuweisungsverfahrens (260) bis zur Zuweisung des letzten noch zuzuweisenden logischen Qubits, was in dem Erlangen Zuweisungskonfiguration von logischen Qubits des Quantenalgorithmus zu physikalischen Qubits des Quantenprozessors resultiert.

2. Verfahren nach Anspruch 1, ferner umfassend nach der Zuweisung des letzten logischen Qubits das Berechnen (280) einer Anzahl von Austauschoperationen anhand der Zuweisungskonfiguration.

3. Verfahren nach Anspruch 2, wobei Schritte, umfassend das Zuweisen (250) eines ersten logischen Qubits, das iterative Verfahren (260) zum Zuweisen der noch zuzuweisenden logischen Qubits und das Berechnen (280) einer Anzahl von Austauschoperationen, mehrfach wiederholt werden, um eine Vielzahl von Zuweisungskonfigurationen mit jeweils einer Anzahl von Austauschoperationen zu erlangen, das Verfahren ferner umfassend:
- Auswählen einer Konfiguration, die eine kleinere Anzahl von Austauschoperationen aufweist, aus der Vielzahl von Zuweisungskonfigurationen.

4. Verfahren nach einem der vorherigen Ansprüche, ferner umfassend nach der Zuweisung des letzten logischen Qubits das Berechnen (280) einer Treue des Quantenalgorithmus, vorzugsweise Schritte, umfassend das Zuweisen (250) eines ersten logischen Qubits, wobei das iterative Verfahren (260) des Zuweisens der noch zuzuweisenden logischen Qubits und des Berechnens (285) einer Treue mehrmals wiederholt werden, um eine Vielzahl von Zuweisungskonfigurationen mit jeweils einer Treue zu erlangen, das Verfahren ferner umfassend:
- Auswählen einer Konfiguration, die eine größere Treue aufweist, aus der genannten Vielzahl von Zuordnungsmustern.

5. Verfahren nach einem der vorherigen Ansprüche, wobei das erste physikalische Qubit ein physikalisches Qubit ist, das einer geometrischen Mitte des Quantenregisters am nächsten ist.

6. Verfahren nach einem der vorherigen Ansprüche, wobei eine Anzahl von logischen Qubits des Quantenalgorithmus, die physikalischen Qubits des Quantenprozessors zugewiesen sind, größer als oder gleich wie etwa 50 ist.

7. Verfahren nach einem der vorherigen Ansprüche, wobei die Anzahl der physikalischen Qubits des Quantenprozessors größer als oder gleich wie etwa das Zweifache einer Anzahl logischer Qubits des Quantenalgorithmus ist.

8. Verfahren nach einem der vorherigen Ansprüche, wobei die erste und/oder die zweite Zufallsauswahl unter Verwendung einer Wahrscheinlichkeitsverteilung aus den Folgenden durchgeführt wird: Exponentialverteilung, Poisson-Verteilung, stückweise lineare Verteilung, stückweise konstante Verteilung, Beta-Verteilung, Gamma-Verteilung, Levy-Verteilung.

9. Verfahren nach einem der vorherigen Ansprüche, wobei die Punktzahl ferner anhand einer Gewichtung der logischen Operationen berechnet wird, wobei die Gewichtung abhängig von der Art der logischen Operation zwischen dem logischen Kandidaten-Qubit und den logischen Qubits gewählt wird, die bereits den physikalischen Qubits zugewiesen sind, die in G mit dem physikalischen Kandidaten-Qubit verbunden sind.

10. Verfahren nach einem der vorherigen Ansprüche, wobei der Quantenalgorithmus ein Algorithmus ist, der ausgewählt ist aus den folgenden Algorithmen: Shor-Algorithmus, Grover-Algorithmus, QAOA-Algorithmus, Quantum Approximate Optimization Algorithmus, VQE-Algorithmus, Variational Quantum Eigensolver, Quanten-Fourier-Transformation, HHL-Algorithmus Harrow, Hassidim, Lloyd.

11. Verfahren nach einem der vorherigen Ansprüche, wobei die physikalischen Qubits (311) neutrale Atome sind, vorzugsweise wobei die Anzahl der neutralen Atome in der Architektur größer als oder gleich wie 100 ist.

12. Verfahren zur Optimierung einer Architektur eines Neutralatom-Quantenprozessors, umfassend:
- Implementieren, für mehrere Architekturen des Quantenprozessors, des Zuweisungsverfahrens nach einem der Ansprüche 2 und 3, wobei die physikalischen Qubits neutrale Atome sind; und
- Vergleichen der Architekturen abhängig von einer Anzahl von Austauschoperationen.

13. Verfahren zur Optimierung einer Architektur eines Neutralatom-Quantenprozessors, umfassend:
- Implementieren, für mehrere Architekturen des Quantenprozessors, des Zuweisungsverfahrens nach Anspruch 4, wobei die physikalischen Qubits neutrale Atome sind; und
- Vergleichen der Architekturen abhängig von einer Anzahl von einer Treue.

14. Computerprogramm, umfassend Programmcodeanweisungen zur Ausführung der Schritte eines Verfahrens nach einem der Ansprüche 1 bis 11, wenn das Computerprogramm von einem Datenprozessor ausgeführt wird.

15. System (10) zur Quantendatenverarbeitung, umfassend:
- ein Experimentalsystem (14), umfassend physikalische Qubits, die gemäß einer gegebenen Architektur angeordnet sind; und
- einen konventionellen Prozessor (12), der für die Durchführung der Schritte eines Verfahrens (200) nach einem der Ansprüche 1 bis 11 konfiguriert ist.

## Claims

1. A method (200) for allocating logical qubits of a quantum algorithm to physical qubits of a quantum processor arranged according to a given architecture, said method being computer-implemented and comprising:
- the establishment (210), from said architecture, of a connectivity graph (G), each node of said graph representing a position of a physical qubit and each link representing a possibility of interaction between two physical qubits;
- the establishment (220), from said quantum algorithm, of a graph of logical operations (G'), each node of said graph representing a logical qubit and each link of said graph representing a quantum logical gate between two logical qubits;
- the assignment (230) of a weight to each logical qubit of said graph of logical operations (G'), determined according to the total number of logical gates involving said logical qubit;
- the ranking (240) of logical qubits according to weight;
- the allocation (250) of a first logical qubit to a first physical qubit of the quantum processor, said first logical qubit being chosen by a first random choice favoring a logical qubit having the greatest weight;
- an iterative procedure (260) for allocating the logical qubits remaining to be allocated comprising:
- the selection (261) of candidate logical qubits, said candidate logical qubits being, among the logical qubits remaining to be allocated, logical qubits linked in the graph of logical operations (G') to at least one of the already allocated logical qubits;
- the selection (263) of candidate physical qubits, said candidate physical qubits being, among the physical qubits remaining to be allocated, physical qubits linked in the connectivity graph to at least one of the already allocated physical qubits;
- for each pair of candidate logical qubit and candidate physical qubit, the calculation (265) of a score, each score being determined, for a possible allocation of said candidate logical qubit to said candidate physical qubit, by the number of logical operations between said candidate logical qubit and the logical qubits already allocated to the physical qubits linked in the connectivity graph (G) to said candidate physical qubit;
- the ranking (267) of pairs of candidate logical qubits and candidate physical qubits according to the score; and
- the allocation (269) of a logical qubit to a physical qubit, said logical qubit and said physical qubit being selected by a second random selection favoring the candidate logical qubit and the candidate physical qubit of a pair of candidate physical qubit and candidate logical qubit having a higher score among said pairs of candidate logical qubits and candidate physical qubits;
- the reproduction of said iterative allocation procedure (260) until the allocation of the last logical qubit remaining to be allocated, thus resulting in producing a configuration for allocating logical qubits of the quantum algorithm to physical qubits of the quantum processor.

2. The method according to claim 1, further comprising, after the allocation of the last logical qubit, the calculation (280) of a number of exchange operations from said allocation configuration.

3. The method according to claim 2, wherein steps comprising the allocation (250) of a first logical qubit, the iterative procedure (260) of allocating the logical qubits remaining to be allocated and the calculation (280) of a number of exchange operations are repeated several times so as to obtain a plurality of allocation configurations each with a number of exchange operations, the method further comprising:
- the choice of a configuration having a smaller number of exchange operations among said plurality of allocation configurations.

4. The method according to any one of the preceding claims, further comprising, after the allocation of the last logical qubit, the calculation (280) of a fidelity of the quantum algorithm, preferably steps comprising the allocation (250) of a first logical qubit, the iterative method (260) for allocating the logical qubits remaining to be allocated, and the calculation (285) of a fidelity, being repeated several times so as to obtain a plurality of allocation configurations each having a fidelity, the method further comprising:
- the choice of a configuration having higher fidelity among said plurality of allocation configurations.

5. The method according to any one of the preceding claims, wherein said first physical qubit is a physical qubit closest to a geometric center of the quantum register.

6. The method according to any one of the preceding claims, wherein a number of logical qubits of said quantum algorithm allocated to physical qubits of the quantum processor is greater than or equal to about 50.

7. The method according to any one of the preceding claims, wherein the number of physical qubits of said quantum processor is greater than or equal to about twice a number of logical qubits of said quantum algorithm.

8. The method according to any one of the preceding claims, wherein one and/or the other of said first and second random choices are made using a probability distribution among the following: exponential distribution, Poisson distribution, piecewise linear distribution, piecewise constant distribution, Beta law, Gamma law, Lévy law.

9. The method according to any one of the preceding claims, wherein said score is further calculated from a weighting of the logical operations, said weighting being chosen according to the type of logical operation between said candidate logical qubit and the logical qubits already allocated to the physical qubits which are linked, in the connectivity graph (G), to said candidate physical qubit.

10. The method according to any one of the preceding claims, wherein said quantum algorithm is an algorithm selected from the following algorithms: Shor algorithm, Grover algorithm, algorithm QAOA, Quantum approximation Optimization Algorithm, algorithm VQE, Variational Quantum Eigensolver, quantum Fourier transform, algorithm HHL, Harrow, Hassidim, Lloyd.

11. The method according to any one of the preceding claims, wherein said physical qubits (311) are neutral atoms, preferably the number of neutral atoms of said architecture being greater than or equal to 100.

12. A method of optimizing an architecture of a neutral-atom quantum processor comprising:
- the implementation, for a plurality of architectures of the quantum processor, of the allocation method according to any one of claims 2 and 3, wherein said physical qubits are neutral atoms; and
- the comparison of said architectures according to a number of exchange operations.

13. A method of optimizing an architecture of a neutral-atom quantum processor comprising:
- the implementation, for a plurality of architectures of the quantum processor, of the allocation method according to claim 4, wherein said physical qubits are neutral atoms; and
- the comparison of said architectures depending upon a fidelity.

14. A computer program comprising program code instructions for executing the steps of a method according to any one of claims 1 to 11 when said computer program is executed by a data processor.

15. A quantum data processing system (10) comprising:
- an experimental system (14) comprising physical qubits arranged according to a given architecture; and
- a classical processor (12) configured for implementing steps of a method (200) according to any one of claims 1 to 11.
